# EUROPEAN PATENT SPECIFICATION

(11) **EP 3 085 174 B1**
(45) Date of publication and mention of the grant of the patent: **18.07.2018**
(21) Application number: 13824681.4
(22) Date of filing: 19.12.2013
(51) Int. Cl.: H04W 64/00, H04W 72/12

(54) **DETERMINING POSITION OF A WIRELESS DEVICE**
BESTIMMUNG DER POSITION EINER DRAHTLOSEN VORRICHTUNG
DÉTERMINATION DE LA POSITION D'UN DISPOSITIF SANS FIL

(43) Date of publication of application: 26.10.2016
(73) Proprietor: Telefonaktiebolaget LM Ericsson (publ), 164 83 Stockholm (SE)
(72) Inventor: ÖSTERLING, Jacob, 175 60 Järfälla (SE)
(74) Representative: Zacco Sweden AB
(86) International application number: PCT/SE2013/051572
(87) International publication number: WO 2015/094051

(56) References cited:
- US-A1- 2013 225 218

## Description

### TECHNICAL FIELD

The invention relates to a method, network node, computer program and computer program product for determining a position of a wireless device, particularly when a plurality of remote radio head devices are used in a single cell.

### BACKGROUND

When deploying wireless communication networks, there is a balance between coverage and capacity. On the one hand, a few large cells can provide great coverage but at a cost of reduced capacity. On the other hand, a scenario with many small cells creates better capacity and throughput, but may not provide the desired coverage. Hence, there is often a combination of larger cells to provide sufficient coverage with smaller cells to provide better capacity.

However, when the cells get too small, wireless terminals moving in the network cause a great number of handovers which causes significant overhead. Moreover, providing coverage indoors using many small cells can be quite costly, with a radio base station for each such small cell.

One solution to this problem is to use remote radio head devices, where several remote radio head devices connected to the same radio base station share the same cell. In this way, a single radio base station can provide coverage in different parts of the building by placing the remote radio head devices appropriately. Moreover, the wireless device can move between the coverage of different remote radio head devices while staying within the same cell, thus avoiding causing handovers.

However, since only one cell is used for the remote radio head devices, the granularity of location determination is quite large. This is a problem in locating the wireless device. Moreover, since the remote radio head devices are often deployed indoors satellite based positioning such as GPS (Global Positioning System) is often unavailable.

The document US 2013/225218 A1 (ARTHUR COLIN M [GB] ET AL) 29 August 2013 (2013-08-29) discloses a scheme wherein a network node ("cell monitor", in the parlance of the document) determines the position of a specific wireless mobile terminal from a group of such terminals. The network node is connected to a plurality of "uplink probes", all belonging to a single cell. A measurement for each one of the probes is received, and a schedule of uplink transmissions (comprising information regarding at what time the wireless mobile terminal was scheduled to transmit) corresponding to the received measurement is used to determine the position of the specific wireless mobile terminal.

### SUMMARY

It is an object to provide better position determination of wireless devices when remote radio head devices of the same radio cell are deployed.

According to a first aspect, it is presents a method, performed in a network node, for determining a position of a specific wireless device, the network node being connected to a plurality of remote radio head devices for a single cell. The method comprises the steps of: obtaining at least one received power measurement for each one of the plurality of remote radio head devices; obtaining a schedule of uplink transmissions corresponding in time to the received power measurements, the schedule comprising information regarding what wireless device was scheduled to transmit at what time; and determining a position of the specific wireless device by evaluating the at least one received power measurement with reference to parts of the schedule relating to the specific wireless device. By comparing received power measurements from the respective remote radio head devices and comparing with the schedule, the position of the specific wireless device can be determined with at least the granularity of remote radio head devices. This is a significant improvement to the prior art. Moreover, the wireless devices do not need to be modified in any way for this method to work.

The step of determining a position may comprise determining what remote radio head device received the strongest radio signal at a scheduled time slot for the specific wireless device.

The method may further comprise the steps, prior to the step of receiving, of: generating a schedule for uplink transmissions to enable the specific wireless device to be associated with a particular remote radio head device; and transmitting one or more signals to apply the schedule for uplink transmissions. By affecting the schedule, potential ambiguities can be avoided while still providing a good throughput.

The step of generating a schedule for uplink transmissions may comprise generating a schedule for uplink transmissions such that the specific wireless device, being attached to the network node, is the only wireless device attached to the network node which is scheduled to transmit at a particular time in the single cell. This makes it easy to determine the closest remote radio head to the specific wireless device.

The step of obtaining at least one power level may comprise obtaining a power level for each one of a plurality of frequency bands for each one of the plurality of remote radio head devices; the step of obtaining a schedule may comprise obtaining a schedule further comprising information regarding what wireless device was scheduled to transmit at what frequency band at what time; and the step of determining a position may comprise determining a position of the specific wireless device by evaluating the power level with reference to parts in time and frequency of the schedule relating to the specific wireless device. Using frequency analysis, possible ambiguities can many times be resolved without resorting to actively affecting the schedule as described above.

The step of obtaining at least one power measurement may comprise receiving the at least one received power measurement from each one of the plurality of remote radio head devices. In other words, the power measurement may be a result of a measurement in each one of the remote radio head devices, which is then reported to the network node.

The step of obtaining at least one power measurement may comprise measuring the at least one received power measurement for each one of the plurality of remote radio head devices. In other words, the measuring of received power is in this case performed in the network node.

The method may be repeated for each time slot in the schedule.

The method may further comprise the step, prior to the step of obtaining at least one received power measurement, of: temporarily reducing uplink power for wireless devices other than the specific wireless device. Such power adjustment can be particularly useful when W-CDMA is employed.

According to a second aspect, it is presented a network node for determining a position of a specific wireless device, the network node being connected to a plurality of remote radio head devices of a single cell. The network node comprises: a processor; and a memory storing instructions that, when executed by the processor, causes the network node to: obtain at least one received power measurement for each one of the plurality of remote radio head devices; obtain a schedule of uplink transmissions corresponding in time to the received power measurements, the schedule comprising information regarding what wireless device was scheduled to transmit at what time; and determine a position of the specific wireless device by evaluating the at least one received power measurement with reference to parts of the schedule relating to the specific wireless device.

The network node according to claim 10 the wherein instructions to determine a position comprise instructions that, when executed by the processor, causes the network node to determine what remote radio head device received the strongest radio signal at a scheduled time slot for the specific wireless device.

The network node may further comprise instructions that, when executed by the processor, causes the network node to: generate a schedule for uplink transmissions to enable the specific wireless device to be associated with a particular remote radio head device; and transmit one or more signals to apply the schedule for uplink transmissions.

The instructions to generate a schedule comprise instructions that, when executed by the processor, causes the network node to generate a schedule for uplink transmissions such that the specific wireless device, being attached to the network node is the only wireless device attached to the network node which is scheduled to transmit at a particular time.

The instructions to obtain at least one power level may comprise instructions that, when executed by the processor, causes the network node to obtain a power level for each one of a plurality of frequency bands for each one of the plurality of remote radio head devices; the instructions to obtain a schedule may comprise instructions that, when executed by the processor, causes the network node to obtain a schedule further comprising information regarding what wireless device was scheduled to transmit at what frequency band at what time; and the instructions to determine a position may comprise instructions that, when executed by the processor, causes the network node to determine a position of the specific wireless device by evaluating the power level with reference to parts in time and frequency of the schedule relating to the specific wireless device.

The instructions to obtain at least one power measurement may comprise instructions that, when executed by the processor, causes the network node to receive the at least one received power measurement from each one of the plurality of remote radio head devices.

The instructions to obtain at least one power measurement may comprise instructions that, when executed by the processor, causes the network node to measure the at least one received power measurement for each one of the plurality of remote radio head devices.

The instructions may be repeated for each time slot in the schedule.

The network node may further comprise instructions that, when executed by the processor, causes the network node to: temporarily reduce uplink power for wireless devices other than the specific wireless device.

According to a third aspect, it is presented a computer program for determining a position of a specific wireless device, the network node being connected to a plurality of remote radio head devices of a single cell. The computer program comprises computer program code which, when run on the network node causes the network node to: obtain at least one received power measurement for each one of the plurality of remote radio head devices; obtain a schedule of uplink transmissions corresponding in time to the received power measurements, the schedule comprising information regarding what wireless device was scheduled to transmit at what time; and determine a position of the specific wireless device by evaluating the at least one received power measurement with reference to parts of the schedule relating to the specific wireless device.

According to a fourth aspect, it is presented a computer program product comprising a computer program according to the third aspect and a computer readable means on which the computer program is stored.

According to a fifth aspect, it is presented a network node comprising means for obtaining at least one received power measurement for each one of a plurality of remote radio head devices connected to the network node for a single cell; means for obtaining a schedule of uplink transmissions corresponding in time to the received power measurements, the schedule comprising information regarding what wireless device was scheduled to transmit at what time; and means for determining a position of a specific wireless device by evaluating the at least one received power measurement with reference to parts of the schedule relating to the specific wireless device.

The means for determining a position may comprise means for determining what remote radio head device received the strongest radio signal at a scheduled time slot for the specific wireless device.

The network node may further comprise means for generating a schedule for uplink transmissions to enable the specific wireless device to be associated with a particular remote radio head device; and transmitting one or more signals to apply the schedule for uplink transmissions.

The means for generating a schedule for uplink transmissions may comprise means for generating a schedule for uplink transmissions such that the specific wireless device, being attached to the network node, is the only wireless device attached to the network node which is scheduled to transmit at a particular time in the single cell.

The means for obtaining at least one power level may comprise means for obtaining a power level for each one of a plurality of frequency bands for each one of the plurality of remote radio head devices; the means for obtaining a schedule may comprise means for obtaining a schedule further comprising information regarding what wireless device was scheduled to transmit at what frequency band at what time; and the means for determining a position may comprise means for determining a position of the specific wireless device by evaluating the power level with reference to parts in time and frequency of the schedule relating to the specific wireless device.

The means for obtaining at least one power measurement may comprise means for receiving the at least one received power measurement from each one of the plurality of remote radio head devices.

The means for obtaining at least one power measurement may comprise means for measuring the at least one received power measurement for each one of the plurality of remote radio head devices.

The network node may comprise means for be repeating processing for each time slot in the schedule.

The network node may further comprise means for temporarily reducing uplink power for wireless devices other than the specific wireless device.

It is to be noted that the term "connected" is not to be interpreted as directly connected; there may be intermediate entities provided between two connected entities.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figs 1A-C are schematic diagrams illustrating environments where embodiments presented herein can be applied;
Fig 2 is a schematic diagram illustrating components of an embodiment of a remote radio head device of Figs 1A-C;
Fig 3 is a schematic graph illustrating a schedule which can be used in the environment of Figs 1A-C according to one embodiment;
Figs 4A-C are schematic graphs illustrating received power measurement for each one of the remote radio head devices of Figs 1A-C according to one embodiment;
Figs 5A-B are schematic graphs illustrating received power measurement for each one of the remote radio head devices of Figs 1A-C according to one embodiment;
Figs 6A-B are flow charts illustrating methods performed in a network node of Fig 1 for determining a position of a specific wireless device;
Fig 7 is a schematic diagram showing some components of an embodiment of the radio base station of Figs 1A-C;
Fig 8 is a schematic diagram showing some components of an embodiment of any one of the intermediate radio units 5 of Figs 1A-C;
Fig 9 is a schematic diagram showing functional modules of an embodiment of the radio base station and/or the intermediate radio unit of Figs 1A-C; and
Fig 10 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

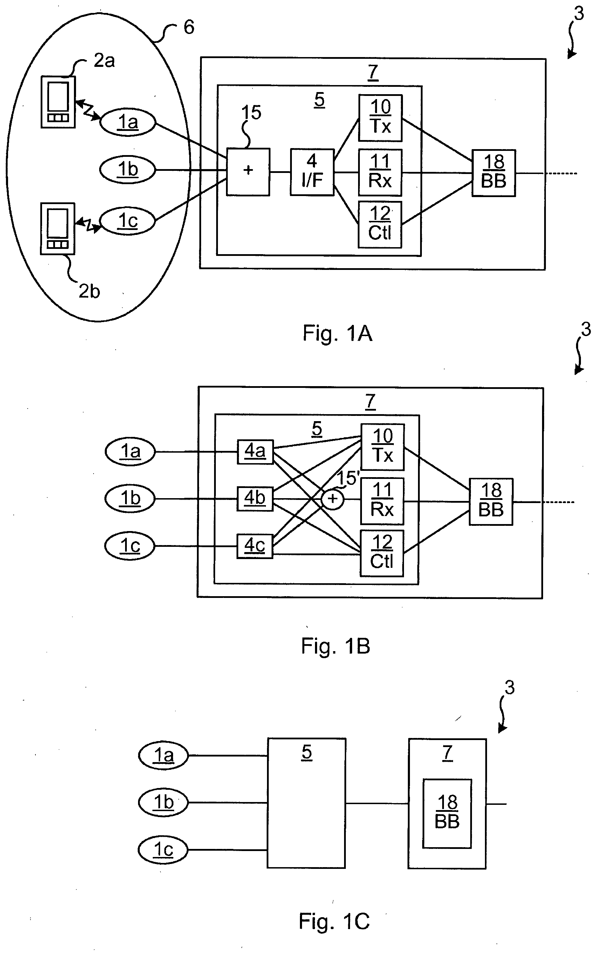

Figs 1A-C are schematic diagrams illustrating a wireless communication networks 3 being environments where embodiments presented herein can be applied. Considering first Fig 1A, the wireless communication network 3 comprises a number of remote radio head devices 1a-c for installation in locations where traditional deployment with antennas being co-located with the radio base stations is not ideal. For example, the wireless communication network 3 can be installed indoors, such as in an office, shopping centre, train station or airport.

It is to be noted that, while the embodiments presented herein are described as implemented using LTE (Long Term Evolution), any applicable communication standard may be used, such as any one or a combination of LTE-SAE (Long Term Evolution - System Architecture Evolution), W-CDMA (Wideband Code Division Multiplex), EDGE (Enhanced Data Rates for GSM (Global System for Mobile communication) Evolution), GPRS (General Packet Radio Service), CDMA2000 (Code Division Multiple Access 2000), or any other current or future wireless network, such as LTE-Advanced, as long as the principles described hereinafter are applicable.

A radio base station 7 here comprises a baseband module 18 and an intermediate radio unit (IRU) 5. The IRU 5 is in turn connected to, and is a link for, a number (in this example three) remote radio head devices 1a-c via respective cables. In this way, the radio base station 7 is a link for uplink and downlink communication for the remote radio head devices connected to the IRU.

The remote radio head devices 1a-c connected to the IRU 5 are part of a single cell 6 and thus share a cell identifier. Antennas do not need to be included in this embodiment of the radio base station 7 or the IRU 5, as the remote radio head devices 1a-c provide the wireless link to one or more wireless devices 2a-b. The wireless link provided by the remote radio head devices 1a-c includes both downlink (DL) communication to the wireless devices 2a-b and uplink (UL) communication from the wireless devices 2a-b. The term wireless device is also known as mobile communication terminal, user equipment (UE), station (STA), mobile terminal, user terminal, user agent, machine-to-machine devices etc., and can be, for example, what today are commonly known as a mobile phone or a tablet/laptop with wireless connectivity or fixed mounted terminal.

In radio communication systems, the data is transmitted and received over the air at a specific radio frequency- either the same for transmission and reception or on separate frequencies. This is often called the radio frequency (RF) or the carrier frequency.

There are many different carrier frequencies, depending on regional spectrum allocation and spectrum license rights. To create a common radio implementation supporting this variety of carrier frequencies, a second set of frequencies is used herein, denoted the Intermediate Frequency (IF), which is used for communication on the cables between the IRU 5 and the remote radio head devices 1a-c.

For uplink communication, the remote radio head devices 1a-c downconvert a received (uplink) signal to IF and send it over its cable to the IRU 5. In this embodiment, the received IF signals are combined in a combiner 15 and fed to an interface circuitry 4. The interface circuitry 4 extracts the received IF signal from the interface and forwards it to the RX (reception) back-end 11. The RX back-end 11 downconverts the received signals from IF to an analogue BB (baseband) signal which is further filtered and digitised. The RX back-end 11 sends the combined received signals in digital form to the baseband module 18 for further processing such as demodulation, decoding, etc. as known in the art per se.

Optionally, the remote radio head devices 1a-c are also powered over the respective cables.

For downlink communication, the process works in reverse to the uplink. Hence, the baseband module 18 sends a digital BB signal for transmission to a TX (transmission) back-end 10 of the IRU 5. The TX back-end 10 pulse shapes the digital BB signal to an analogue transmission signal and upconverts the transmission signal to IF. The transmission signal in IF is then inserted onto the interface by the interface circuitry 4, and provided to the combiner 15 which also functions as a splitter, providing the same transmission signal in IF to all connected remote radio head devices 1a-c over the respective cables. The remote radio head devices 1a-c then upconvert the IF signal to RF and transmit the RF signal over the air to the wireless devices 2a-b.

It is to be noted that the processing of uplink and downlink signals in the IRU and the remote radio head devices 1a-c do not need to occur in the digital domain and can be (but do not need to be) performed completely in the analogue domain.

The remote radio head devices 1a-c convert from IF to RF for downlink transmission and from RF to IF for uplink reception. Conversely, the IRU converts from digital BB to IF for downlink transmission and from IF to digital BB for uplink reception.

By using IF over the cables instead of RF, cheaper, low quality galvanic cables can be used, such s CAT5, CAT5e or CAT6 cables. In this way, existing indoor cabling can many times be reused during installation, which significantly saves cost and installation time.

Moreover, there is an optional control link between a processor 12 in the IRU 5 and each remote radio head device 1a-c. This control link can be used e.g. to transfer received signal power measurements and/or to set the RF frequency used for downconversion and upconversion in the remote radio head devices 1a-c.

The transmission and reception is under the control of the MAC (Media Access Control) scheduler in the baseband module 18. The MAC scheduler informs what transmissions should be made and informs, via the downlink signaling, the wireless devices when to transmit and on which frequency and power.

It is to be noted that, although Fig 1A shows the baseband module 18 connected to one IRU 5, each baseband module 18 can be connected to several IRUs. Each IRU may have its own cell or several IRUs may share a single cell.

It is to be noted that while the embodiment of Fig 1A shows three remote radio head devices 1a-c, there may be fewer or more remote radio head devices connected to each IRU 5.

The embodiment shown in Fig 1B is similar to the embodiment of Fig 1A, and only differences to the embodiment of Fig 1A will be described. In this embodiment, there are several instances of interface circuitry 4a-c, one for each remote radio head device. Transmission signals are sent in IF from the transmission back-end 10 to each one of the instances of interface circuitry 4a-c, either directly or via a splitter (not shown). Analogously, control signals are sent between the processor 12 and each one of the interface circuitry 4a-c, either directly or via a splitter (not shown). Received signals are sent in IF from the respective interface circuitry 4a-c to a combiner 15' which may here be a pure combiner without splitting functionality.

In this embodiment, the control link between the IRU and the remote radio head devices 1a-c can be point-to-point, which prevents collision of control messages to different remote radio head devices 1a-c. Also, this allows some measurements to be done on each individual link in the IRU 5, e.g. received power measurements. Hence, the IRU may comprise a power meter, such as an envelop detector, for detecting uplink power for each remote radio head device. This can e.g. be sampled every 1 ms synchronised with uplink scheduling, such as Transmission Time Intervals (TTI) in LTE. Optionally, the IRU further comprises FFT modules to generate spectral parts of the received power.

Furthermore, in this embodiment, different intermediate frequencies may be used on the different interfaces to best adapt to each interface interference and transmission characteristics. Thus, the TX back-end 10 may send the transmission signal using different IF frequencies to the different instances of interface circuitry 4a-c, and the RX back-end 11 downconverts from different IF frequencies for the different instances of interface circuitry 4a-c.

Fig 1C is a schematic diagram illustrating an alternative embodiment in terms of IRU and radio base station. Here, the IRU 5 is separate, but connected to, the radio base station 7. The IRU 5 itself can be implemented e.g. as shown in Fig 1A or Fig 1B.

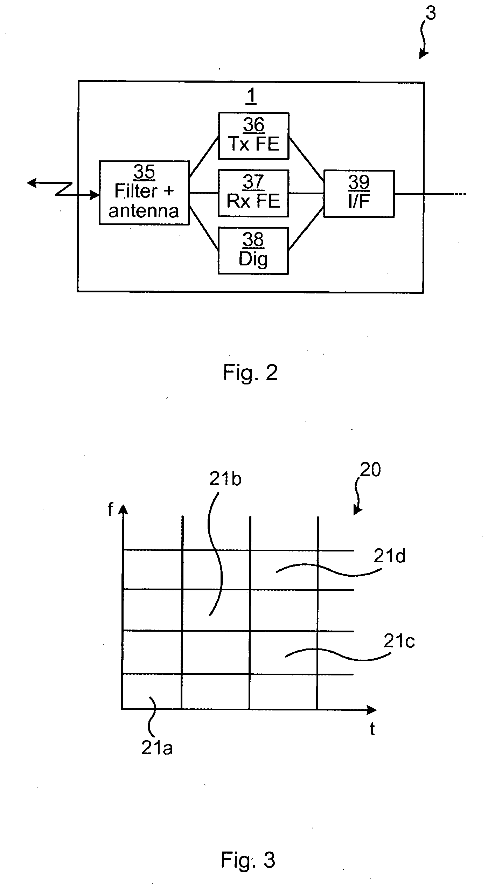

Fig 2 is a schematic diagram illustrating components of an embodiment of a remote radio head device of Figs 1A-C, here represented by a single remote radio head device 1. The remote radio head device comprises an interface circuitry 39, a transmission front-end 36, a reception front-end 37, a digital unit 38 and an antenna device 35.

In line with what is explained above, the RX Front End 37 downconverts received signals in RF to IF for transfer over the cable to the IRU 5. Moreover, the TX Front End 36 upconverts transmission signals from IF, as received over the cable from the IRU 5 to RF for transmission to wireless devices. The antenna device 35 comprises one or more antennas for transmission of RF signals and reception of RF signals. The antenna device 35 may also comprise appropriate filters to filter out unwanted signals. The interface circuitry 39 inserts and extracts (multiplexes and demultiplexes) the transmission IF signal, the received IF signal and the control signal onto the cable. The interface circuitry 39 may use different frequency bands for uplink signals, downlink signals and control signals to thereby multiplex all of these on a single cable.

Optionally, the RX front end 37 here comprises a power meter, such as an envelop detector, for detecting uplink power. The power level can e.g. be sampled every 1 ms synchronised with uplink scheduling, such as Transmission Time Intervals (TTI) in LTE. Optionally, the RX front end 37 further comprises FFT modules to generate spectral parts of the received power. The received power is signalled uplink to the IRU.

A digital unit 38 communicates with the processor 12 of the IRU. For example, the digital unit 38 may be used to send the received power measurements to the IRU or to receive commands from the processor 12 to alter frequencies used by the TX Front End 36 and RX Front End 37 for upconversion and/or downconversion. The digital unit 38 can be implemented using software instructions such as a computer program executing by a processor and/or using only hardware, such as application specific integrated circuits, field programmable gate arrays, discrete logical components, etc.

Fig 3 is a schematic graph illustrating a schedule 20 which can be used in the environment of Figs 1A-C according to one embodiment. The schedule 20 is partitioned in time slots along a horizontal time axis and in frequency bands along a vertical frequency axis. This results in a matrix which can be utilised for communication, e.g. uplink communication in LTE. For instance, a first resource element 21a and a second resource element 21b can both be assigned for uplink communication for a first wireless device. A third resource element 21c can be assigned to uplink communication for a second wireless device and a fourth resource element can be assigned to uplink communication for a third wireless device.

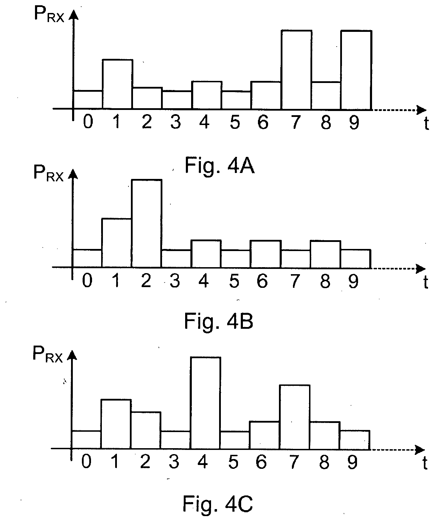

Figs 4A-C are schematic graphs illustrating received power measurement for each one of the remote radio head devices of Figs 1A-C according to one embodiment. The horizontal axis represents time and the vertical axis represents received power P_{RX}. The received power is illustrated as histograms, showing the received power for each enumerated time slot. The histogram of Fig 4A represents the received power of the first radio head device 1A of Figs 1A-C, the histogram of Fig 4B represents the received power of the second radio head device 1B of Figs 1A-C and the histogram of Fig 4C represents the received power of the third radio head device 1C of Figs 1A-C. The received power can be measured in each remote radio head device or in the IRU.

In this example, each time slot is 1 ms long, corresponding to a TTI (Transmission Time Interval) of LTE. In this example, the UL MAC scheduler scheduled one wireless device in time slot 2, one wireless device in time slot 4, two wireless devices in time slot 7 and two wireless devices in time slot 9. This makes it possible to map the reported power levels to the scheduled wireless devices. For the examples shown in Figs 4A-C, one can conclude the following:
In time slot 0, no wireless devices are scheduled. In time slot 1, there is external interference, e.g. due to other wireless devices being scheduled in an external macro cell. In time slot 2, the one scheduled wireless device is close to the second radio head device. In time slot 3, no wireless devices are scheduled. In time slot 4, the scheduled wireless device is close to the first radio head device. In time slot 5, no wireless devices are scheduled. In time slot 6, no wireless devices are scheduled, but there is external noise/interference e.g. from a macro cell. In time slot 7, the scheduled wireless devices are close to the first radio head device and the third radio head device. In time slot 8, there are no wireless devices scheduled, but there is some interference/noise, e.g. from a macro cell. In time slot 9, both scheduled wireless devices are close to the third radio head.

Hence, by comparing the schedule with the received power measurements, the location of a wireless device can in many situations be determined.

In some cases, such as for time slot 7, if several wireless devices are scheduled for UL transmission at the same time and are located by different radio head devices, it is not possible using such measurements to identify by which radio head device each wireless device is located. To solve such an ambiguity, the schedule can be adjusted such that a specific wireless device, for which the position is to be determined, is scheduled to be the only UL transmitter at a particular time slot. Another way would be to schedule all attached wireless devices for UL transmission in one time slot, and then to schedule all attached wireless device, except the specific wireless device, for UL transmission in another time slot. The radio head which then experiences a loss in received power measurement can then be determined to be closest to the specific wireless device.

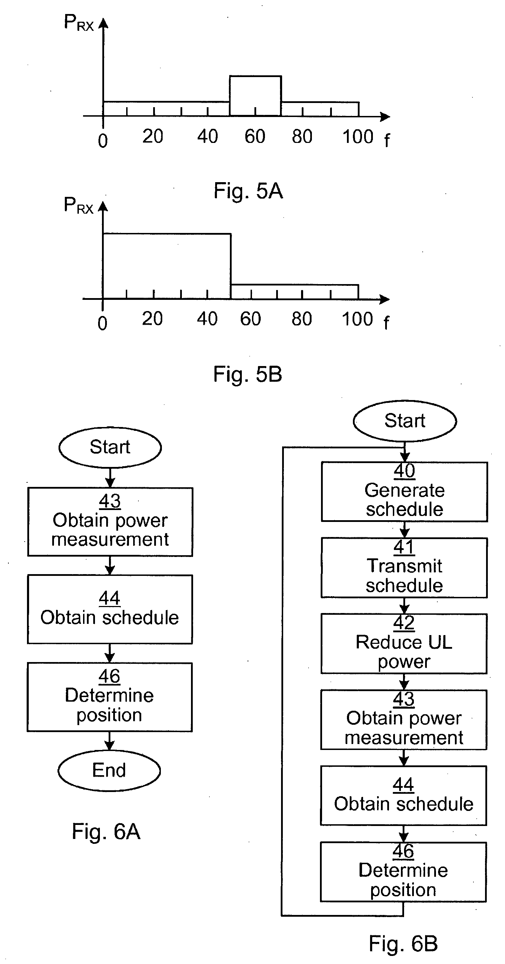

Figs 5A-B are schematic graphs illustrating received power measurement for each one of the remote radio head devices of Figs 1A-C according to one embodiment. The horizontal axis represents frequency and the vertical axis represents received power P_{RX}. The graphs represents an optional embodiment where frequency analysis is employed to resolve ambiguities in position determination when only time analysis is employed, as explained with reference to Figs 4A-C above. The histogram of Fig 5A represents spectral parts of the received power in time slot 7 of the third radio head and the histogram of Fig 5B represents spectral parts of the received power in time slot 7 of the first radio head.

Figs 5A-B further illustrates the example of Figs 4A-C, here for time slot 7, where there is an ambiguity. In a normal LTE carrier, there are 100 resource blocks. It is now clearly visible that the wireless device scheduled in the lower fifty resource blocks is mainly received via the first remote radio head device, whereas the wireless device scheduled in resource blocks 50-70 is located close to the third remote radio head device.

In this embodiment, the UL MAC scheduler memory also includes which resource blocks each wireless device was scheduled on.

Figs 6A-B are flow charts illustrating methods performed in a network node of Fig 1 for determining a position of a specific wireless device. The network node can be the radio base station 7 or the IRU 5 of Figs 1A-C. In any case, the network node is connected to, and is a link for, a plurality of remote radio head devices for a single cell as described above.

In an *obtain power measurements* step 43, at least one received power measurement is obtained for each one of the plurality of remote radio head devices. In one embodiment, the at least one received power measurement is received for each one of the plurality of remote radio head devices. The received power measurements can be signalled from the remote radio heads or measured in the IRU.

Optionally, frequency analysis can be employed. When this is the case, this step comprises obtaining a power level for each one of a plurality of frequency bands for each one of the plurality of remote radio head devices, as shown in Figs 5A-B and explained above. The remote radio head devices may in such an embodiment e.g. comprise FFT modules to generate spectral parts of the received power at the remote radio head device. These spectral parts are then communicated to the network node to assist in the determination of position. In one embodiment, the spectral part received power measurements are measured in the IRU.

In an *obtain schedule* step 44, a schedule of uplink transmissions corresponding in time to the received power measurements is obtained. The schedule comprises information regarding what wireless device was scheduled to transmit at what time. The schedule has previously been stored, e.g. by the MAC UL scheduler, from when it was previously transmitted to the wireless devices. This is not a big issue since the schedule only needs to be kept for a short time and can then be discarded.

When frequency analysis is employed, the schedule further comprises information regarding what wireless device was scheduled to transmit at what frequency band at what time.

One general example of a schedule is shown in Fig 3 and described in more detail above.

In a *determine position* step 46, a position of the specific wireless device is determined by evaluating the at least one received power measurement with reference to parts of the schedule relating to the specific wireless device. How this can be done is explained in more detail with reference to Figs 4A-C above.

In one embodiment, this comprises determining what remote radio head device received the strongest radio signal at a scheduled time slot for the specific wireless device. The position of the wireless device can then be determined by approximating the position to the remote radio head device which received the strongest radio signal.

When frequency analysis is employed, the position of the specific wireless device is determined by evaluating the power level with reference to parts in time and frequency of the schedule relating to the specific wireless device, e.g. as described above with reference to Figs 5A-B.

The method can be repeated for each time slot in the schedule.

Fig 6B is a flow chart illustrating a method similar to the method illustrated in Fig 6A. Only new steps or steps which are modified compared to the method illustrated in Fig 6A will be described below.

In an optional *generate schedule* step 40, a schedule for uplink transmissions is generated to enable the specific wireless device to be associated with a particular remote radio head device. This may comprise generating a schedule for uplink transmissions such that the specific wireless device is the only wireless device attached to the network node which is scheduled to transmit at a particular time in the single cell. This makes it easy to determine what remote radio head device is closest to the specific wireless device by checking what remote radio head device receives the strongest signal at that particular time. Optionally, the schedule can be adjusted in other ways to assist in the position determination of the specific wireless device.

In an optional *transmit schedule* step 41, one or more signals to apply the schedule for uplink transmissions is transmitted. This can e.g. comprise sending one or more grants for uplink traffic to affected wireless devices attached to the network node when LTE is used. This ensures that the schedule is followed by all the wireless devices attached to the network node.

In an optional *reduce UL power* step 42, uplink power for wireless devices other than the specific wireless device is temporarily reduced. Alternatively or additionally, the uplink power for the specific wireless device can be boosted. In this way, the network node can determine what remote radio head device is closest to the specific wireless device by checking what remote radio head device receives the strongest signal during the period that the adjusted power is valid for. Such power adjustment can be particularly useful when W-CDMA is employed or when the uplink schedule, for other reasons, is not to be adjusted.

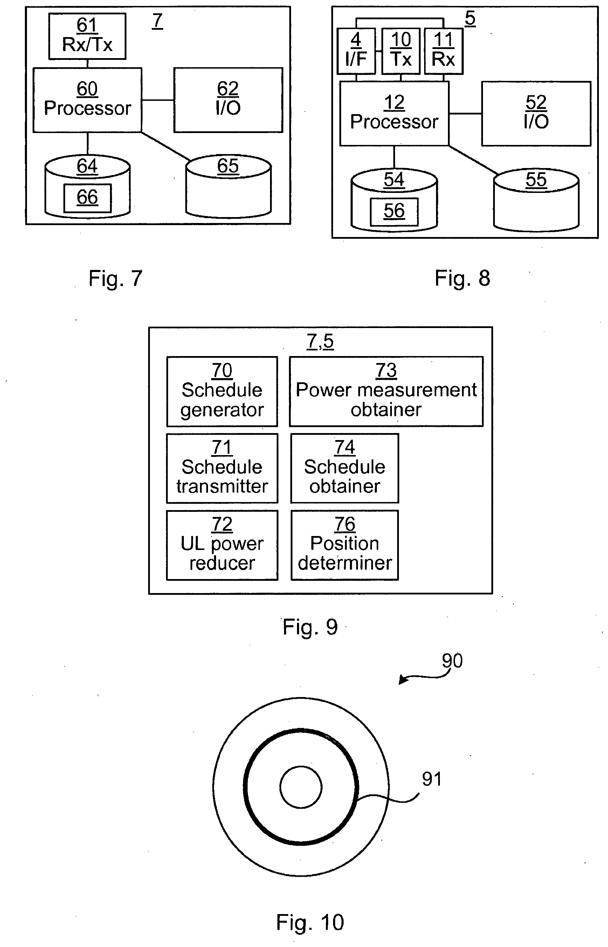

Fig 7 is a schematic diagram showing some components of the radio base station 7 of Figs 1A-C. A processor 60 is provided using any combination of one or more of a suitable central processing unit (CPU), multiprocessor, microcontroller, digital signal processor (DSP), application specific integrated circuit etc., capable of executing software instructions 66 stored in a memory 64, which can thus be a computer program product. The processor 60 can be configured to execute the methods described with reference to Figs 6A-B above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 65 can be any combination of read and write memory (RAM) and read only memory (ROM). The data memory 65 may also comprise persistent storage, which, for example, can be any single one or combination of magnetic memory, optical memory, solid state memory or even remotely mounted memory.

The radio base station 7 further comprises an I/O interface 62 for communicating with a core network and optionally with other radio base stations.

The radio base station 7 also comprises one or more transceivers 61, comprising analogue and digital components for radio communication with wireless devices within one or more radio cells, e.g. using remote radio head devices as described above. The processor 60 controls the general operation of the radio base station 7, e.g. by sending control signals to the transceiver 61 and receiving reports from the transceiver 61 of its operation.

Other components of the radio base station 7 are omitted in order not to obscure the concepts presented herein.

Fig 8 is a schematic diagram showing some components of an embodiment of any one of the intermediate radio units 5 of Figs 1A-C, here represented by a single intermediate radio unit 5. A processor 12 is provided using any combination of one or more of a suitable central processing unit (CPU), multiprocessor, microcontroller, digital signal processor (DSP), application specific integrated circuit etc., capable of executing software instructions 56 stored in a memory 54, which can thus be a computer program product. The processor 12 can be configured to execute the methods described with reference to Figs 6A-B above.

The memory 54 can be any combination of read and write memory (RAM) and read only memory (ROM). The memory 54 also comprises persistent storage, which, for example, can be any single one or combination of magnetic memory, optical memory, solid state memory or even remotely mounted memory.

A data memory 55 can be any combination of read and write memory (RAM) and read only memory (ROM). The data memory 55 may also comprise persistent storage, which, for example, can be any single one or combination of magnetic memory, optical memory, solid state memory or even remotely mounted memory.

The intermediate radio unit 5 further comprises an interface circuitry 4, a transmitter back-end 10 and receiver back-end 11 which operate as described with reference to Figs 1A-C above.

The intermediate radio unit 5 may separate from and connected to a radio base station, or form part of a hosting radio base station. When 'the intermediate radio unit 5 forms part of a hosting radio base station, some or all of the components of Fig 7 may also be used for other purposes within the radio base station and may e.g. be the equivalent components shown in Fig 8.

Other components of the intermediate radio unit 5 are omitted in order not to obscure the concepts presented herein.

Fig 9 is a schematic diagram showing functional modules of an embodiment of the radio base station and/or the IRU of Figs 1A-C. The modules can be implemented using software instructions such as a computer program executing in the radio base station 7 and/or IRU 5 and/or using hardware, such as application specific integrated circuits, field programmable gate arrays, discrete logical components, etc. The modules correspond to the steps in the methods illustrated in Figs 6A-B.

A schedule generator 70 is arranged to generate a schedule for uplink transmissions to enable the specific wireless device to be associated with a particular remote radio head device. This module corresponds to the *generate schedule* step of Fig 6B.

A schedule transmitter 71 is arranged to transmit one or more signals to apply the schedule for uplink transmissions. This module corresponds to the *transmit schedule* step 41 of Fig 6B.

A UL power reducer 72 is arranged to temporarily reduce uplink power for wireless devices other than the specific wireless device. This module corresponds to the *reduce UL power* step 42 of Fig 6B.

A power measurement obtainer 73 is arranged to obtain at least one received power measurement for each one of the plurality of remote radio head devices. This module corresponds to the *obtain power measurement* step 43 of Fig 6A and 6B

A schedule obtainer 74 is arranged to obtain a schedule of uplink transmissions corresponding in time to the received power measurements, the schedule comprising information regarding what wireless device was scheduled to transmit at what time. This module corresponds to the obtain *schedule* step 44 of Fig 6A and 6B

A position determiner 76 is arranged to determine a position of the specific wireless device by evaluating the at least one received power measurement with reference to parts of the schedule relating to the specific wireless device. This module corresponds to the *determine position* step 46 of Fig 6A and 6B

Fig 10 shows one example of a computer program product 90 comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 66 of Fig 8 or the computer program product 56 of Fig 9. While the computer program 91 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method, performed in a network node (7), for determining a position of a specific wireless device (2a-b), the network node (7) being connected to a plurality of remote radio head devices (1a-c, 1) for a single cell (6), the method comprising the steps of:
obtaining (43) at least one received power measurement for each one of the plurality of remote radio head devices (1a-c, 1);
obtaining (44) a schedule (20) of uplink transmissions corresponding in time to the received power measurements, the schedule (20) comprising information regarding what wireless device was scheduled to transmit at what time; and
determining (46) a position of the specific wireless device by evaluating the at least one received power measurement with reference to parts of the schedule relating to the specific wireless device and
further comprising the steps, prior to the step of receiving (43), of:
generating (40) a schedule for uplink transmissions to enable the specific wireless device (2a) to be associated with a particular remote radio head device; and
transmitting (41) one or more signals to apply the schedule for uplink transmissions.

2. The method according to claim 1, wherein the step of determining (46) a position comprises determining what remote radio head device received the strongest radio signal at a scheduled time slot for the specific wireless device.

3. The method according to any preceding claim, wherein the step of generating (40) a schedule for uplink transmissions comprises generating a schedule for uplink transmissions such that the specific wireless device (2a), being attached to the network node (7), is the only wireless device attached to the network node which is scheduled to transmit at a particular time in the single cell (6).

4. The method according to any one of the preceding claims, wherein
the step of obtaining (43) at least one power level comprises obtaining a power level for each one of a plurality of frequency bands for each one of the plurality of remote radio head devices (1a-c, 1);
the step of obtaining (44) a schedule comprises obtaining a schedule further comprising information regarding what wireless device was scheduled to transmit at what frequency band at what time; and
the step of determining (46) a position comprises determining a position of the specific wireless device by evaluating the power level with reference to parts in time and frequency of the schedule relating to the specific wireless device.

5. The method according to any one of claims 1 to 4, wherein the step of obtaining (43) at least one power measurement comprises receiving the at least one received power measurement from each one of the plurality of remote radio head devices (1a-c, 1).

6. The method according to any one of claims 1 to 4, wherein the step of obtaining (43) at least one power measurement comprises measuring the at least one received power measurement for each one of the plurality of remote radio head devices (1a-c, 1).

7. The method according to any one of the preceding claims, further comprising the step, prior to the step of obtaining (43) at least one received power measurement, of:
temporarily reducing (42) uplink power for wireless devices other than the specific wireless device.

8. A network node (7) for determining a position of a specific wireless device (2a-b), the network node (7) being connected to a plurality of remote radio head devices (1a-c, 1) of a single cell (6), the network node (7) comprising:
a processor (60); and
a memory (64) storing instructions (66) that, when executed by the processor, causes the network node (7) to:
obtain at least one received power measurement for each one of the plurality of remote radio head devices (1a-c, 1);
obtain a schedule (20) of uplink transmissions corresponding in time to the received power measurements, the schedule (20) comprising information regarding what wireless device was scheduled to transmit at what time; and
determine a position of the specific wireless device by evaluating the at least one received power measurement with reference to parts of the schedule relating to the specific wireless device and
further comprising instructions that, when executed by the processor, causes the network node (7) to:
generate a schedule for uplink transmissions to enable the specific wireless device (2a) to be associated with a particular remote radio head device; and
transmit one or more signals to apply the schedule for uplink transmissions.

9. The network node (7) according to claim 8 wherein the instructions to determine a position comprise instructions that, when executed by the processor, causes the network node (7) to determine what remote radio head device received the strongest radio signal at a scheduled time slot for the specific wireless device.

10. The network node (7) according to any of the claims 8-9, wherein the instructions to generate a schedule comprise instructions that, when executed by the processor, causes the network node (7) to generate a schedule for uplink transmissions such that the specific wireless device (2a), being attached to the network node (7) is the only wireless device attached to the network node which is scheduled to transmit at a particular time.

11. The network node (7) according to any of the claims 8-10, wherein
the instructions to obtain at least one power level comprise instructions that, when executed by the processor, causes the network node (7) to obtain a power level for each one of a plurality of frequency bands for each one of the plurality of remote-radio head devices (1a-c, 1);
the instructions to obtain a schedule comprise instructions that, when executed by the processor, causes the network node (7) to obtain a schedule further comprising information regarding what wireless device was scheduled to transmit at what frequency band at what time; and
the instructions to determine a position comprise instructions that, when executed by the processor, causes the network node (7) to determine a position of the specific wireless device by evaluating the power level with reference to parts in time and frequency of the schedule relating to the specific wireless device.

12. The network node (7) according to any one of claims 8-11, wherein the instructions to obtain at least one power measurement comprise instructions that, when executed by the processor, causes the network node (7) to receive the at least one received power measurement from each one of the plurality of remote radio head devices (1a-c, 1).

13. The network node (7) according to any one of claims 8-11, wherein the instructions to obtain at least one power measurement comprise instructions that, when executed by the processor, causes the network node (7) to measure the at least one received power measurement for each one of the plurality of remote radio head devices (1a-c, 1).

14. The network node (7) according to any one of claims 8-13, further comprising instructions that, when executed by the processor, causes the network node (7) to: temporarily reduce uplink power for wireless devices other than the specific wireless device.

15. A computer program (66, 91) for determining a position of a specific wireless device (2a-b), the network node (7) being connected to a plurality of remote radio head devices (1a-c, 1) of a single cell (6), the computer program comprising computer program code which, when run on the network node (7) causes the network node (7) to:
obtain at least one received power measurement for each one of the plurality of remote radio head devices (1a-c, 1);
obtain a schedule (20) of uplink transmissions corresponding in time to the received power measurements, the schedule (20) comprising information regarding what wireless device was scheduled to transmit at what time; and
determine a position of the specific wireless device by evaluating the at least one received power measurement with reference to parts of the schedule relating to the specific wireless device and
further causes the network node (7) to:
generate a schedule for uplink transmissions to enable the specific wireless device (2a) to be associated with a particular remote radio head device; and
transmit one or more signals to apply the schedule for uplink transmissions.

## Patentansprüche

1. Verfahren, das in einem Netzknoten (7) zum Ermitteln einer Position einer spezifischen drahtlosen Vorrichtung (2a-b) durchgeführt wird, wobei der Netzknoten (7) mit mehreren entfernt angeordneten Funkkopfvorrichtungen (1a-c, 1) für eine Einzelzelle (6) verbunden ist, wobei das Verfahren folgende Schritte umfasst:
Erhalten (43) von mindestens einer empfangenen Leistungsmessung für jede der mehreren entfernt angeordneten Funkkopfvorrichtungen (1a-c, 1);
Erhalten (44) eines Zeitplans (20) von Uplink-Übertragungen, die zeitlich den empfangenen Leistungsmessungen entsprechen, wobei der Zeitplan (20) Informationen darüber umfasst, welche drahtlose Vorrichtung zu welcher Zeit senden sollte; und
Bestimmen (46) einer Position der spezifischen drahtlosen Vorrichtung durch Auswerten der mindestens einen empfangenen Leistungsmessung unter Bezugnahme auf Teile des Zeitplans, die sich auf die spezifische drahtlose Vorrichtung beziehen; und
wobei das Verfahren ferner vor dem Schritt des Empfangens (43) folgende Schritte umfasst:
Erzeugen (40) eines Zeitplans für Uplink-Übertragungen, um zu ermöglichen, dass die spezifische drahtlose Vorrichtung (2a) einer spezifischen entfernt angeordneten Funkkopfvorrichtung zugeordnet wird; und
Senden (41) eines oder mehrerer Signale, um den Plan für Uplink-Übertragungen anzuwenden.

2. Verfahren nach Anspruch 1, wobei der Schritt des Bestimmens (46) einer Position das Bestimmen umfasst, welche entfernt angeordnete Funkkopfvorrichtung das stärkste Funksignal in einem geplanten Zeitschlitz für die spezifische drahtlose Vorrichtung empfangen hat.

3. Verfahren nach einem der vorhergehenden Ansprüche, wobei der Schritt des Erzeugens (40) eines Zeitplans für Uplink-Übertragungen das Erzeugen eines Zeitplans für Uplink-Übertragungen umfasst, sodass die spezifische drahtlose Vorrichtung (2a), die an dem Netzknoten (7) angeschlossen ist, die einzige drahtlose Vorrichtung ist, die an dem Netzknoten angeschlossen ist, die zu einer bestimmten Zeit in der Einzelzelle (6) senden soll.

4. Verfahren nach einem der vorhergehenden Ansprüche, wobei
der Schritt des Erhaltens (43) mindestens eines Leistungspegels das Erhalten eines Leistungspegels für jedes von mehreren Frequenzbändern für jede der mehreren entfernt angeordneten Funkkopfvorrichtungen (1a-c, 1) umfasst;
der Schritt des Erhaltens (44) eines Zeitplans das Erhalten eines Zeitplans umfasst, der ferner Informationen darüber umfasst, welche drahtlose Vorrichtung zu welchem Zeitpunkt in welchem Frequenzband senden sollte; und
der Schritt des Bestimmens (46) einer Position das Bestimmen einer Position der spezifischen drahtlosen Vorrichtung durch Bewerten des Leistungspegels mit Bezug auf Teile von Zeit und Frequenz des Zeitplans, der sich auf die spezifische drahtlose Vorrichtung bezieht, umfasst.

5. Verfahren nach einem der Ansprüche 1 bis 4, wobei der Schritt des Erhaltens (43) von mindestens einer Leistungsmessung das Empfangen der mindestens einen empfangenen Leistungsmessung von jeder der mehreren entfernt angeordneten Funkkopfvorrichtungen (1a-c, 1) umfasst.

6. Verfahren nach einem der Ansprüche 1 bis 4, wobei der Schritt des Erhaltens (43) mindestens einer Leistungsmessung das Messen der mindestens einen empfangenen Leistungsmessung für jede der mehreren entfernt angeordneten Funkkopfvorrichtungen (1a-c, 1) umfasst.

7. Verfahren nach einem der vorstehenden Ansprüche, das ferner vor dem Schritt des Erhaltens (43) mindestens einer empfangenen Leistungsmessung den folgenden Schritt umfasst:
zeitweiliges Reduzieren (42) der Uplink-Leistung für andere drahtlose Vorrichtungen als die spezifische drahtlose Vorrichtung.

8. Netzknoten (7) zum Bestimmen einer Position einer spezifischen drahtlosen Vorrichtung (2a-b), wobei der Netzknoten (7) mit mehreren entfernt angeordneten Funkkopfvorrrichtungen (1a-c, 1) einer Einzelzelle (6) verbunden ist, wobei der Netzknoten (7) Folgendes umfasst:
einen Prozessor (60); und
einen Speicher (64), der Befehle (66) speichert, die, wenn sie durch den Prozessor ausgeführt werden, den Netzknoten (7) zu Folgendem veranlassen:
Erhalten von mindestens einer empfangenen Leistungsmessung für jede der mehreren entfernt angeordneten Funkkopfvorrichtungen (1a-c, 1);
Erhalten eines Zeitplans (20) von Uplink-Übertragungen, die zeitlich den empfangenen Leistungsmessungen entsprechen, wobei der Zeitplan (20) Informationen darüber umfasst, welche drahtlose Vorrichtung zu welcher Zeit senden sollte; und
Bestimmen einer Position der spezifischen drahtlosen Vorrichtung durch Auswerten der mindestens einen empfangenen Leistungsmessung unter Bezugnahme auf Teile des Zeitplans, die sich auf die spezifische drahtlose Vorrichtung beziehen, und
ferner umfassend Anweisungen, die, wenn sie durch den Prozessor ausgeführt werden, den Netzknoten (7) zu Folgendem veranlassen:
Erzeugen eines Zeitplans für Uplink-Übertragungen, um zu ermöglichen, dass die spezifische drahtlose Vorrichtung (2a) einer spezifischen entfernt angeordneten Funkkopfvorrichtung zugeordnet wird; und
Senden eines oder mehrerer Signale, um den Plan für Uplink-Übertragungen anzuwenden.

9. Netzknoten (7) nach Anspruch 8, wobei die Anweisungen zum Bestimmen einer Position Anweisungen umfassen, die, wenn sie durch den Prozessor ausgeführt werden, den Netzknoten (7) veranlassen, zu bestimmen, welche entfernt angeordnete Funkkopfvorrichtung das stärkste Funksignal in einem geplanten Zeitschlitz für die spezifische drahtlose Vorrichtung empfangen hat.

10. Netzknoten (7) nach einem der Ansprüche 8 bis 9, wobei die Anweisungen zum Erzeugen eines Plans Anweisungen umfassen, die, wenn sie durch den Prozessor ausgeführt werden, den Netzknoten (7) veranlassen, einen Zeitplan für Uplink-Übertragungen derart zu erzeugen, dass die spezifische drahtlose Vorrichtung (2a), die an dem Netzknoten (7) angeschlossen ist, die einzige drahtlose Vorrichtung ist, die an dem Netzknoten angeschlossen ist, die zu einem bestimmten Zeitpunkt sendet.

11. Netzknoten (7) nach einem der Ansprüche 8 bis 10, wobei
die Anweisungen zum Erhalten mindestens eines Leistungspegels Anweisungen umfassen, die, wenn sie durch den Prozessor ausgeführt werden, den Netzknoten (7) veranlassen, einen Leistungspegel für jedes von mehreren Frequenzbändern für jede der mehreren entfernt angeordneten Funkkopfvorrichtungen (1a-c, 1) zu erhalten;
die Anweisungen zum Erhalten eines Zeitplans Anweisungen umfassen, die, wenn sie durch den Prozessor ausgeführt werden, den Netzknoten (7) veranlassen, einen Zeitplan zu erhalten, der ferner Informationen darüber umfasst, welche drahtlose Vorrichtung zu welchem Zeitpunkt in welchem Frequenzband senden sollte; und
die Anweisungen zum Bestimmen einer Position Anweisungen umfassen, die, wenn sie durch den Prozessor ausgeführt werden, den Netzknoten (7) veranlassen, eine Position der spezifischen drahtlosen Vorrichtung durch Bewerten des Leistungspegels mit Bezug auf Teile in Zeit und Frequenz des Plans bezüglich der spezifischen drahtlosen Vorrichtung zu bestimmen.

12. Netzknoten (7) nach einem der Ansprüche 8 bis 11, wobei die Anweisungen zum Erhalten mindestens einer Leistungsmessung Anweisungen umfassen, die, wenn sie durch den Prozessor ausgeführt werden, den Netzknoten (7) veranlassen, die mindestens eine empfangene Leistungsmessung von jeder der mehreren entfernt angeordneten Funkkopfvorrichtungen (1a-c, 1) zu empfangen.

13. Netzknoten (7) nach einem der Ansprüche 8 bis 11, wobei die Anweisungen zum Erhalten mindestens einer Leistungsmessung Anweisungen umfassen, die, wenn sie durch den Prozessor ausgeführt werden, den Netzknoten (7) veranlassen, die mindestens eine empfangene Leistungsmessung für jede der mehreren entfernt angeordneten Funkkopfvorrichtungen (1a-c, 1) zu messen.

14. Netzknoten (7) nach einem der Ansprüche 8 bis 13, der ferner Anweisungen umfasst, die, wenn sie durch den Prozessor ausgeführt werden, den Netzknoten (7) veranlassen, die Uplink-Leistung für andere drahtlose Vorrichtungen als die spezifische drahtlose Vorrichtung vorübergehend zu reduzieren.

15. Computerprogramm (66, 91) zum Bestimmen einer Position einer spezifischen drahtlosen Vorrichtung (2a-b), wobei der Netzknoten (7) mit mehreren entfernt angeordneten Funkkopfvorrichtungen (1a-c, 1) einer Einzelzelle (6) verbunden ist, wobei das Computerprogramm einen Computerprogrammcode umfasst, der, wenn er auf dem Netzknoten (7) ausgeführt wird, den Netzknoten (7) zu Folgendem veranlasst:
Erhalten von mindestens einer empfangenen Leistungsmessung für jede der mehreren entfernt angeordneten Funkkopfvorrichtungen (1a-c, 1);
Erhalten eines Zeitplans (20) von Uplink-Übertragungen, die zeitlich den empfangenen Leistungsmessungen entsprechen, wobei der Zeitplan (20) Informationen darüber umfasst, welche drahtlose Vorrichtung zu welcher Zeit senden sollte; und
Bestimmen einer Position der spezifischen drahtlosen Vorrichtung durch Auswerten der mindestens einen empfangenen Leistungsmessung mit Bezug auf Teile des Zeitplans, die sich auf die spezifische drahtlose Vorrichtung beziehen, und
ferner den Netzknoten (7) zu Folgendem veranlasst:
Erzeugen eines Zeitplans für Uplink-Übertragungen, um zu ermöglichen, dass die spezifische drahtlose Vorrichtung (2a) einer spezifischen entfernt angeordneten Funkkopfvorrichtung zugeordnet wird; und
Senden eines oder mehrerer Signale, um den Plan für Uplink-Übertragungen anzuwenden.

## Revendications

1. Procédé, exécuté dans un noeud de réseau (7), pour déterminer une position d'un dispositif sans fil spécifique (2a-b), le noeud de réseau (7) étant connecté à une pluralité de dispositifs de tête radio distante (1a-c, 1) pour une cellule unique (6), le procédé comprenant les étapes consistant à :
obtenir (43) au moins une mesure de puissance reçue pour chaque dispositif de la pluralité de dispositifs de tête radio distante (1a-c, 1) ;
obtenir (44) un programme (20) de transmissions de liaison montante correspondant en temps aux mesures de puissance reçues, le programme (20) comprenant des informations concernant quel dispositif sans fil a été programmé pour transmettre à quel moment ; et
déterminer (46) une position du dispositif sans fil spécifique en évaluant la au moins une mesure de puissance reçue en référence à des parties du programme se rapportant au dispositif sans fil spécifique et
comprenant en outre les étapes, avant l'étape de réception (43), consistant à :
générer (40) un programme pour des transmissions de liaison montante pour permettre au dispositif sans fil spécifique (2a) d'être associé à un dispositif de tête radio distante particulier ; et
transmettre (41) un ou plusieurs signaux pour appliquer le programme pour les transmissions de liaison montante.

2. Procédé selon la revendication 1, dans lequel l'étape de détermination (46) d'une position comprend le fait de déterminer quel dispositif de tête radio distante a reçu le signal radio le plus fort à un créneau temporel programmé pour le dispositif sans fil spécifique.

3. Procédé selon une quelconque revendication précédente, dans lequel l'étape de génération (40) d'un programme pour les transmissions de liaison montante comprend la génération d'un programme pour les transmissions de liaison montante de telle sorte que le dispositif sans fil spécifique (2a), étant attaché au noeud de réseau (7), est le seul dispositif sans fil attaché au noeud de réseau qui est programmé pour transmettre à un moment particulier dans la cellule unique (6).

4. Procédé selon l'une quelconque des revendications précédentes, dans lequel
l'étape d'obtention (43) d'au moins un niveau de puissance comprend l'obtention d'un niveau de puissance pour chaque bande de fréquence d'une pluralité de bandes de fréquence pour chaque dispositif de la pluralité de dispositifs de tête radio distante (1a-c, 1) ;
l'étape d'obtention (44) d'un programme comprend l'obtention d'un programme comprenant en outre des informations concernant quel dispositif sans fil a été programmé pour transmettre à quelle bande de fréquence à quel moment ; et
l'étape de détermination (46) d'une position comprend la détermination d'une position du dispositif sans fil spécifique en évaluant le niveau de puissance en référence à des parties en temps et en fréquence du programme se rapportant au dispositif sans fil spécifique.

5. Procédé selon l'une quelconque des revendications 1 à 4, dans lequel l'étape d'obtention (43) d'au moins une mesure de puissance comprend la réception de la au moins une mesure de puissance reçue depuis chaque dispositif de la pluralité de dispositifs de tête radio distante (1a-c, 1).

6. Procédé selon l'une quelconque des revendications 1 à 4, dans lequel l'étape d'obtention (43) d'au moins une mesure de puissance comprend la mesure de la au moins une mesure de puissance reçue pour chaque dispositif de la pluralité de dispositifs de tête radio distante (1a-c, 1).

7. Procédé selon l'une quelconque des revendications précédentes, comprenant en outre l'étape, avant l'étape d'obtention (43) d'au moins une mesure de puissance reçue, consistant à :
réduire temporairement (42) la puissance de liaison montante pour des dispositifs sans fil autres que le dispositif sans fil spécifique.

8. Noeud de réseau (7) pour déterminer une position d'un dispositif sans fil spécifique (2a-b), le noeud de réseau (7) étant connecté à une pluralité de dispositifs de tête radio distante (1a-c, 1) d'une cellule unique (6), le noeud de réseau (7) comprenant :
un processeur (60) ; et
une mémoire (64) stockant des instructions (66) qui, lorsqu'elles sont exécutées par le processeur, amènent le noeud de réseau (7) à :
obtenir au moins une mesure de puissance reçue pour chaque dispositif de la pluralité de dispositifs de tête radio distante (1a-c, 1) ;
obtenir un programme (20) de transmissions de liaison montante correspondant en temps aux mesures de puissance reçues, le programme (20) comprenant des informations concernant quel dispositif sans fil a été programmé pour transmettre à quel moment ; et
déterminer une position du dispositif sans fil spécifique en évaluant la au moins une mesure de puissance reçue en référence à des parties du programme se rapportant au dispositif sans fil spécifique et
comprenant en outre des instructions qui, lorsqu'elles sont exécutées par le processeur, amènent le noeud de réseau (7) à :
générer un programme pour des transmissions de liaison montante pour permettre au dispositif sans fil spécifique (2a) d'être associé à un dispositif de tête radio distante particulier ; et
transmettre un ou plusieurs signaux pour appliquer le programme pour les transmissions de liaison montante.

9. Noeud de réseau (7) selon la revendication 8, dans lequel les instructions pour déterminer une position comprennent des instructions qui, lorsqu'elles sont exécutées par le processeur, amènent le noeud de réseau (7) à déterminer quel dispositif de tête radio distante a reçu le signal radio le plus fort à un créneau temporel planifié pour le dispositif sans fil spécifique.

10. Noeud de réseau (7) selon l'une quelconque des revendications 8 à 9, dans lequel les instructions pour générer un programme comprennent des instructions qui, lorsqu'elles sont exécutées par le processeur, amènent le noeud de réseau (7) à générer un programme pour des transmissions de liaison montante de telle sorte que le dispositif sans fil spécifique (2a), étant attaché au noeud de réseau (7) est le seul dispositif sans fil attaché au noeud de réseau qui est programmé pour transmettre à un moment particulier.

11. Noeud de réseau (7) selon l'une quelconque des revendications 8 à 10, dans lequel
les instructions pour obtenir au moins un niveau de puissance comprennent des instructions qui, lorsqu'elles sont exécutées par le processeur, amènent le noeud de réseau (7) à obtenir un niveau de puissance pour chaque bande de fréquence d'une pluralité de bandes de fréquence pour chaque dispositif de la pluralité de dispositifs de tête radio distante (1a-c, 1) ;
les instructions pour obtenir un programme comprennent des instructions qui, lorsqu'elles sont exécutées par le processeur, amènent le noeud de réseau (7) à obtenir un programme comprenant en outre des informations concernant quel dispositif sans fil a été programmé pour transmettre à quelle bande de fréquence à quel moment ; et
les instructions pour déterminer une position comprennent des instructions qui, lorsqu'elles sont exécutées par le processeur, amènent le noeud de réseau (7) à déterminer une position du dispositif sans fil spécifique en évaluant le niveau de puissance en référence à des parties en temps et en fréquence du programme se rapportant au dispositif sans fil spécifique.

12. Noeud de réseau (7) selon l'une quelconque des revendications 8 à 11, dans lequel les instructions pour obtenir au moins une mesure de puissance comprennent des instructions qui, lorsqu'elles sont exécutées par le processeur, amènent le noeud de réseau (7) à recevoir la au moins une mesure de puissance reçue depuis chaque dispositif de tête radio distante de la pluralité de dispositifs de tête radio distante (1a-c, 1).

13. Noeud de réseau (7) selon l'une quelconque des revendications 8 à 11, dans lequel les instructions pour obtenir au moins une mesure de puissance comprennent des instructions qui, lorsqu'elles sont exécutées par le processeur, amènent le noeud de réseau (7) à mesurer la au moins une mesure de puissance reçue pour chaque dispositif de la pluralité de dispositifs de tête radio distante (1a-c, 1).

14. Noeud de réseau (7) selon l'une quelconque des revendications 8 à 13, comprenant en outre des instructions qui, lorsqu'elles sont exécutées par le processeur, amènent le noeud de réseau (7) à : réduire temporairement la puissance de liaison montante pour des dispositifs sans fil autres que le dispositif sans fil spécifique.

15. Programme informatique (66, 91) pour déterminer une position d'un dispositif sans fil spécifique (2a-b), le noeud de réseau (7) étant connecté à une pluralité de dispositifs de tête radio distante (1a-c, 1) d'une cellule unique (6), le programme informatique comprenant un code de programme informatique qui, lorsqu'il est exécuté sur le noeud de réseau (7) amène le noeud de réseau (7) à :
obtenir au moins une mesure de puissance reçue pour chaque dispositif de la pluralité de dispositifs de tête radio distante (1a-c, 1) ;
obtenir un programme (20) de transmissions de liaison montante correspondant en temps aux mesures de puissance reçues, le programme (20) comprenant des informations concernant quel dispositif sans fil a été programmé pour transmettre à quel moment ; et
déterminer une position du dispositif sans fil spécifique en évaluant la au moins une mesure de puissance reçue en référence à des parties du programme se rapportant au dispositif sans fil spécifique et
amener en outre le noeud de réseau (7) à :
générer un programme pour des transmissions de liaison montante pour permettre au dispositif sans fil spécifique (2a) d'être associé à un dispositif de tête radio distante particulier ; et
transmettre un ou plusieurs signaux pour appliquer le programme pour les transmissions de liaison montante.
